(19) Europäisches Patentamt
European Patent Office
Office européen des brevets

(11) **EP 1 715 764 B1**

(12) **EUROPÄISCHE PATENTSCHRIFT**

(45) Veröffentlichungstag und Bekanntmachung des Hinweises auf die Patenterteilung:
**15.12.2010 Patentblatt 2010/50**

(21) Anmeldenummer: 05700334.5

(22) Anmeldetag: **26.01.2005**

(51) Int Cl.:
*A23L 2/74* (2006.01)     *A23L 2/08* (2006.01)
*B01D 61/18* (2006.01)     *B01D 61/22* (2006.01)

(86) Internationale Anmeldenummer:
**PCT/CH2005/000039**

(87) Internationale Veröffentlichungsnummer:
**WO 2005/077208 (25.08.2005 Gazette 2005/34)**

(54) **VERFAHREN ZUR DIAFILTRATION EINES PRODUKTES UND VORRICHTUNG ZUR DURCHFUHRUNG DES VERFAHRENS**

METHOD FOR THE DIAFILTRATION OF A PRODUCT AND DEVICE FOR CARRYING OUT SAID METHOD

PROCEDE DE DIAFILTRATION D'UN PRODUIT, ET DISPOSITIF POUR LA MISE EN OEUVRE DE CE PROCEDE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **18.02.2004 CH 260042004**

(43) Veröffentlichungstag der Anmeldung:
**02.11.2006 Patentblatt 2006/44**

(73) Patentinhaber: **Bucher Unipektin AG**
**8166 Niederweningen (CH)**

(72) Erfinder: **ZIMMER, Edgar**
**79787 Lauchringen (DE)**

(56) Entgegenhaltungen:
**EP-A- 0 302 015     WO-A-03/086593**
**US-A- 3 959 246     US-A- 5 693 229**
**US-B1- 6 440 222     US-B1- 6 544 577**

**Beschreibung**

**TECHNISCHES GEBIET**

Die Erfindung betrifft ein Verfahren zur Diafiltration eines Produktes, eine Vorrichtung für die Durchführung des Verfahrens, eine Filtrationsanlage mit der Vorrichtung sowie eine Verwendung der Vorrichtung und der Filtrationsanlage gemäss den Oberbegriffen der unabhängigen Patentansprüche.

**STAND DER TECHNIK**

Als Diafiltration wird die Filtration eines Produkts mit Membranfiltrationsmitteln unter Zuführung eines Waschfluids zu dem Produkt bezeichnet, wodurch die Konzentration an filtergängigen Inhaltsstoffen im Produkt abnimmt, also ein Auswaschen dieser Stoffe stattfindet, ohne dass es zwangsläufig zu einer Aufkonzentration der nicht-filtergängigen Inhaltsstoffe im Produkt bzw. zu einer Eindickung desselben kommt. Als Waschfluid werden produktfremde Waschfluide, wie z.B. separat zugeführtes Wasser oder Lösungsmittel, produkteigenes Permeat, welches z.B. einer nachgeschalteten Diafiltrationsstufe entnommen wird, oder eine Mischung von beidem verwendet (siehe hierzu auch R.F. Madsen, Design of sanitary and sterile UF- and diafiltration plants, Separation and Purification Technology, 22-23 (2001) 79-87). Die ausschliessliche Rückführung von Permeat von den Membranfiltrationsmitteln zurück in den Produkt-Strom, wie sie gelegentlich zur Regelung der Permeatleistung angewendet wird, stellt indes keine Diafiltration dar, findet hier doch kein Auswaschen statt, sondern lediglich eine Zirkulation der filtergängigen Inhaltsstoffe in einem Kreislauf.

US 6440222 beschreibt ein Verfahren zur Gewinnung von Saccharose durch mehrstufige Membranfiltration.

Die heute bekannten Diafiltrationsmethoden weisen alle den Nachteil auf, dass der Auswaschgrad des Produktes, also der Grad der Abreicherung der filtergängigen Inhaltsstoffe im Produkt, bei stationären Betriebsbedingungen, wie sie für kontinuierlich arbeitende mehrstufige Grossanlagen unabdingbar sind, nicht einstellbar ist und somit Qualität und Menge der erzeugten Konzentrat- und Permeat-Ströme nur bedingt beeinflussbar sind.

**DARSTELLUNG DER ERFINDUNG**

Es stellt sich daher die Aufgabe, Verfahren und Vorrichtungen zur Verfügung zu stellen, welche die Nachteile des Standes der Technik nicht aufweisen oder diese zumindest teilweise vermeiden.

Diese Aufgabe wird durch das Verfahren, die Vorrichtung und die Filtrationsanlage gemäss den unabhängigen Patentansprüchen gelöst.

Ein erster Aspekt der Erfindung betrifft ein Verfahren zur Diafiltration eines Produktes. Dabei werden einem Strom aus einem zu diafiltrierenden Produkt, z.B. ein Strom aus eingedicktem Fruchtsaft, welcher Membranfiltrationsmitteln zwecks Filtration zugeführt wird, ein erster Fluid-Strom aus einem produktfremden Waschfluid, z.B. Wasser, und ein zweiter Fluid-Strom aus einem produkteigenen Permeat, z.B. von den verwendeten Filtrationsmitteln rückgeführtes oder von weiteren Filtrationsverfahren bereitgestelltes Permeat, zugeführt, derart, dass der Produktstrom vor dem Eintritt in die Membranfiltrationsmittel durch den ersten und den zweiten Fluid-strom verdünnt wird. Dabei wird das Mengenverhältnis von dem als erster Fluid-Strom zugeführten Waschfluid und dem als zweiter Fluid-Strom zugeführten Permeat, welches produkteigene filtergängige Inhaltsstoffe enthält, auf einen gewünschten Wert eingestellt oder geregelt. Hierdurch ergibt sich der Vorteil, dass der Auswaschgrad, welcher bei ausschliesslicher Zuführung des produktfremden Waschfluids maximal und bei ausschliesslicher Zuführung des produkteigenen Permeats minimal ist, einstellbar bzw. regelbar ist und sich Qualität und Menge der erzeugten Konzentrat- und Permeat-Ströme selbst bei stationären Betriebsbedingungen, wie sie für kontinuierlich arbeitende mehrstufige Grossanlagen erforderlich sind, in weiten Bereichen einstellen bzw. regeln lassen. Der Auswaschgrad kann beispielsweise in Prozent ausgedrückt werden und errechnet sich in diesem Fall wie folgt:

$$\text{Auswaschgrad} = \frac{(C_0 - C_{df})}{C_0} \times 100\%$$

wobei $C_0$ die Anfangskonzentration von filtergängigen Stoffen im Produkt vor der Diafiltration ist und $C_{df}$ die Endkonzentration von filtergängigen Stoffen im Produkt nach der Diafiltration.

In einer bevorzugten Ausführungsform des Verfahrens wird zudem die Gesamtmenge des zugeführten Fluids bestehend aus dem ersten und dem zweiten Fluidstrom eingestellt oder geregelt, wodurch sich die Viskosität des die Membranfiltrationsmittel als Retentat verlassenden Produktstromes einstellen bzw. regeln lässt.

Wird der Permeatfluss der Membranfiltrationsmittel gemessen, also der Volumen- oder Massenstrom des mit den Membranfiltrationsmitteln erzeugten Permeats, und die Gesamtmenge des zugeführten Fluids bestehend aus der Summe der Volumen- oder Massenströme der zugeführten ersten und zweiten Fluidströme in Abhängigkeit von dem Permeatfluss eingestellt, so lässt sich gezielt ein bestimmter Eindickungs- oder Verdünnungsgrad des die Membranfiltrationsmittel verlassenden Produktstromes einstellen bzw. regeln. Auch kann eine Eindickung oder Verdünnung dieses Produktstromes gezielt vermieden werden, indem gesamthaft genau soviel Fluid zugeführt wird, wie über das Membranfiltrationsmodul als Permeat abgeführt wird.

In einer weiteren bevorzugten Ausführungsform werden der erste und der zweite Fluidstrom als jeweils unabhängig voneinander einstellbare Fluidströme bereitgestellt. Hierdurch kann sowohl das Verhältnis der Fluid-ströme zueinander als auch die Gesamtmenge des zugeführten Fluids auf einfache Weise eingestellt bzw. geregelt werden.

In noch einer weiteren bevorzugten Ausführungsform des Verfahrens wird der zu diafiltrierende Produktstrom im Kreislauf durch die Membranfiltrationsmittel zirkuliert, wodurch sich, falls gewünscht, eine praktisch vollständige Auswaschung der filtergängigen Inhaltsstoffe bzw. ein Auswaschgrad von nahezu 100% erreichen lässt.

Als zweiter Fluidstrom wird ein Permeat verwendet, welches von den Membranfiltrationsmitteln dieses Diafiltrationsverfahrens erzeugt wird. So kann, falls gewünscht, eine Auswaschung der filtergängigen Inhaltsstoffe vollständig verhindert werden, was einem Auswaschgrad von 0% entspricht, indem das erzeugte Permeat vollständig in den zu filtrierenden Produktstrom zurückgeführt wird. Wird dabei der zu filtrierende Produktstrom wie zuvor dargelegt in einem Kreislauf durch die Membranfiltrationsmittel zirkuliert, kann der Auswaschgrad beliebig zwischen 0% und 100% eingestellt werden.

In noch einer weiteren bevorzugten Ausführungsform des Verfahrens wird sichergestellt, dass der Druck auf der Permeatseite der Membranfiltrationsmittel im wesentlichen konstant ist und entkoppelt ist von der Gesamtmenge des zugeführten Permeats und Waschfluids und vom Verhältnis dieser Fluidströme zueinander. Hierdurch lässt sich das Auftreten negativer Transmembrandrücke verhindern, was insbesondere bei Membranfiltrationsmitteln mit laminierten Membranen zu einer Zerstörung der Membranen führen kann. Bevorzugterweise wird die Permeatseite der Membranfiltrationsmittel auf Atmosphärendruck gehalten, da sich dies durch Belüftung auf einfache und zuverlässige Weise bewerkstelligen lässt.

In noch einer bevorzugten Ausführungsform des Verfahrens wird das Produkt, welches als Produktstrom bereitgestellt wird, vorgängig in einem oder mehreren vorgeschalteten Diafiltrationsverfahren ausgewaschen. Es erfolgt also eine mehrstufige Diafiltration, bei welcher dem zuvor dargelegten Diafiltrationsverfahren weitere Diafiltrationsverfahren vorgeschaltet werden, so dass für das zuvor dargelegte Verfahren ein Produktstrom bereitgestellt wird, dem bereits durch Diafiltration filtergängige Inhaltsstoffe entzogen worden sind. Auf diese Weise lässt sich auch mit kontinuierlichen Filtrationsprozessen bei hohem Produktdurchsatz eine gute Auswascheffizienz erzielen.

Dabei ist es bevorzugt, wenn in den vorgeschalteten Diafiltrationsverfahren als Waschfluid ausschliesslich produkteigenes Permeat verwendet wird, welches bevorzugterweise in dem jeweiligen Diafiltrationsverfahren und/oder in einem direkt auf dieses folgenden Diafiltrationsverfahren erzeugt wird. Auf diese Weise wird nur Permeat als Waschfluid verwendet, welches die gleiche oder eine geringere Menge an filtergängigen Inhaltsstoffen enthält wie das im jeweiligen Verfahren erzeugte Permeat, so dass auf produktfremde Waschfluide verzichtet werden kann und gesamthaft über sämtliche hintereinandergeschaltete Diafiltrationsverfahren gesehen mit einer minimalen Menge produktfremden Waschfluids eine maximale Auswascheffizienz bei maximaler Konzentration der filtergängigen Inhaltsstoffe im Permeat erzielt werden kann.

Bevorzugterweise werden bei solchen mehrstufigen Diafiltrationsverfahren die in den einzelnen vorgeschalteten Diafiltrationsverfahren von den Membranfiltrationsmitteln erzeugten Permeatmengen einzeln gemessen und die den einzelnen Diafiltrationsverfahren als Waschfluid zugeführten Permeatmengen jeweils in Abhängigkeit von diesen gemessenen Permeatmengen eingestellt bzw. geregelt. Hierdurch lassen sich auch bei variierender Produktqualität stabile Betriebsbedingungen sicherstellen, was für kontinuierlich arbeitende mehrstufige Grossanlagen von äusserster Wichtigkeit ist, um einen wirtschaftlichen und zuverlässigen Betrieb zu gewährleisten. Dabei ist es bevorzugt, wenn das im jeweiligen Diafiltrationsverfahren als Waschfluid zugeführte Permeat 10% bis 100%, bevorzugterweise 80% bis 100% der in diesem Verfahren erzeugten Permeatmenge entspricht, wobei bei einem Wert von kleiner 100% eine Eindickung des Produktstromes erfolgt.

Auch ist es bei solchen mehrstufigen Diafiltrationsverfahren bevorzugt, wenn die Permeatseiten der Membranfiltrationsmittel zumindest der vorgeschalteten Diafiltrationsverfahren oder aller Diafiltrationsverfahren auf einem einheitlichen, konstanten Druck gehalten werden, wodurch sich die Verfahrensführung und der anlagentechnische Aufwand gering halten lässt. Dabei ist es bevorzugt, wenn die Permeatseiten im wesentlichen auf Atmosphärendruck gehalten werden, weil sich dies besonders einfach und zuverlässig bewerkstelligen lässt.

Werden dabei die Permeatseiten der Membranfiltrationsmittel der vorgeschalteten Diafiltrationsverfahren oder aller Diafiltrationsverfahren über eine Verbindungsleitung miteinander verbunden, ergibt sich ein besonders übersichtlicher und zuverlässiger Aufbau der verwendeten Filtrationsanlage.

In weiteren bevorzugten Ausführungsformen des Verfahrens werden dem oder den Diafiltrationsverfahren weitere Membranfiltrationsverfahren vorgeschaltet, und zwar bevorzugterweise Nano-, Ultra- und/oder Microfiltrationsverfahren. Ein solches Verfahren stellt ein Produktionsverfahren dar, mit dem ein Rohprodukt wirtschaftlich und, falls gewünscht, im wesentlichen vollständig in filtergängige und nicht-filtergängige Bestandteile aufgeteilt werden kann.

Bevorzugterweise wird bei dem Verfahren gemäss dem ersten Aspekt der Erfindung ein Fruchtsaft, bevorzugterweise ein Steinobst-, Beeren-, Zitrus-, Ananas-, Trauben-, Apfel- oder Birnensaft als Produkt verwendet. Bei solchen Produkten treten die Vorteile des erfindungsgemässen Verfahrens besonders deutlich zu Tage.

Ein zweiter Aspekt der Erfindung betrifft eine Vorrichtung für die Durchführung des Verfahrens gemäss dem ersten Aspekt der Erfindung. Die Vorrichtung weist Membranfiltrationsmittel auf, z.B. eine Anordnung aus mehreren parallel und/oder hintereinander geschalteten Membranfiltrationsmodulen, welche mit einem Produkt-Einlass, einem Produkt-Auslass und einem Permeat-Auslass versehen sind. Ebenfalls vorhanden sind eine Produkt-Zuführung zum Zuführen eines Produktstroms zum Produkt-Einlass, eine Waschfluid-Zuführung zum Zuführen eines Waschfluid-Stroms zu dem Produktstrom, eine Permeat-Zuführung zum Zuführen eines produkteigenen Permeat-Stroms zu dem Produktstrom und Einstellmittel zum Einstellen oder Regeln des Verhältnisses der zur Produktzuführung zugeführten Waschfluid- und Permeat-Ströme zueinander und bevorzugterweise auch zum Einstellen oder Regeln der mit dem ersten und zweiten Fluidstrom zugeführten Gesamtfluidmenge. Mit dieser Vorrichtung ist es möglich, eine Diafiltration gemäss dem ersten Aspekt der Erfindung durchzuführen und die Qualität und Menge der erzeugten Konzentrat- und Permeat-Ströme in weiten Bereichen einzustellen bzw. zu regeln.

In einer bevorzugten Ausführungsform sind die dem Produktstrom zugeführten oder zuführbaren Waschfluid- und Permeat-Ströme unabhängig voneinander einstellbar, so dass durch deren Einstellung bzw. Regelung sowohl das Verhältnis derselben zueinander als auch die dem Produktstrom zugeführte Gesamtmenge dieser Ströme eingestellt bzw. geregelt werden kann.

In einer weiteren bevorzugten Ausführungsform der Vorrichtung umfasst diese des Weiteren eine den Einstellmitteln zugeordnete automatische Regelung, mit welcher die Gesamtmenge bestehend aus zugeführter Waschfluidmenge und zugeführter Permeatmenge und/oder das Verhältnis von zugeführter Waschfluidmenge zu zugeführter Permeatmenge automatisiert in einem Regelkreis eingestellt bzw. geregelt werden kann, bevorzugterweise in Abhängigkeit von kontinuierlich oder intervallweise durch Messung ermittelten Verfahrensparametern, wie beispielsweise die Viskosität des Produktes, die von den Membranfiltrationsmitteln erzeugte Permeatmenge oder der Druck am Produkt-Einlass. Auf diese Weise kann ein bestimmter konstanter Auswaschgrad und gegebenenfalls auch eine bestimmte konstante Viskosität des aus den Membranfiltrationsmitteln austretenden Produktstromes auch bei variierender Produktqualität automatisch sichergestellt werden.

Die Permeat-Zuführung ist als Permeatrückführung zum Rückführen von Permeat vom Permeat-Auslass der Membranfiltrationsmittel zum Produktstrom ausgebildet. Hierdurch wird es möglich, auf extern bereitgestelltes Permeat zu verzichten und neben dem Waschfluid von den Membranfiltrationsmitteln der Vorrichtung erzeugtes Permeat zum Verdünnen des Produkts vor der Filtration zu verwenden.

In einer weiteren bevorzugten Ausführungsform der Vorrichtung sind Produkt-Einlass und Produkt-Auslass der Membranfiltrationsmittel über eine Zirkulationspumpe miteinander zu einem Produkt-Kreislauf verbunden, wodurch es möglich ist, zumindest einen Teil des Produkts mehrmals zuerst mit Waschfluid und Permeat zu verdünnen und sodann zu filtrieren und so den Auswaschgrad der Vorrichtung gegenüber einer einfachen Durchlauffiltration deutlich zu erhöhen.

Dabei ist es bevorzugt, wenn eine Produkt-Speiseleitung zum Zuleiten eines Produktstromes zum Produkt-Kreislauf und eine Produkt-Ablaufleitung zum Ableiten eines Produktstromes aus dem Produkt-Kreislauf vorhanden ist, so dass ein kontinuierlicher Betrieb der Vorrichtung möglich ist.

Bevorzugterweise mündet die Produkt-Speiseleitung bei solchen Vorrichtungen stromaufwärts von der Produkt-Ablaufleitung in den Produkt-Kreislauf ein, so dass ein Abströmen von frisch dem Produkt-Kreislauf zugeführtem Produkt in die Produkt-Ablaufleitung sicher verhindert wird und das Produkt durch die Strömung den Membranfiltrationsmitteln zugeführt wird.

Auch ist es bevorzugt, wenn die Produkt-Speiseleitung und die Produkt-Ablaufleitung im Produkt-Kreislauf im Bereich zwischen dem Produkt-Auslass der Membranfiltrationsmittel und der Zirkulationspumpe angeordnet sind, so dass die zur Verfügung stehende Pumpenleistung vollumfänglich zur Speisung der Membranfiltrationsmittel zur Verfügung steht.

Ebenfalls vorteilhaft ist es, wenn die Waschfluid-Zuführung in den Produkt-Kreislauf im Bereich zwischen dem Produkt-Auslass der Membranfiltrationsmittel und der Zirkulationspumpe einmündet, bevorzugterweise im Bereich zwischen der Produkt-Ablaufleitung und der Zirkulationspumpe, da so ein Abströmen von zugeführtem Waschfluid in die Produkt-Ablaufleitung sicher verhindert werden kann. Dasselbe gilt sinngemäss für die Anordnung der Permeat-Zuführung.

In einer weiteren bevorzugten Ausführungsform der Vorrichtung münden die Waschfluid-Zuführung und die Permeat-Zuführung über zwei separate oder über eine gemeinsame Einmündung in den Produktstrom ein, wobei sich im letztgenannten Fall der Vorteil ergibt, dass sich das Waschfluid und das Permeat bereits vor dem Eintritt in den Produktstrom vermischen können.

In noch einer weiteren bevorzugten Ausführungsform ist die Vorrichtung derartig ausgestaltet, dass der Druck am Permeat-Auslass der Filtrationsmittel unabhängig von den zugeführten Waschfluid- und Permeatmengen ist, so dass bei einer Veränderung dieser Mengen keine Veränderung des Drucks am Permeat-Auslass entsteht. Dabei ist es vorteilhaft, wenn die Vorrichtung derart ausgestaltet ist, dass der Druck am Permeat-Auslass im wesentlichen konstant bei Atmosphärendruck liegt, was sich beispielsweise dadurch bewerkstelligen lässt, dass eine belüftete Permeatableitung verwendet wird. Auf diese Weise lässt sich ein Druckaufbau auf der Permeatseite der Membranfiltrationsmittel, welcher bei laminierten Membranen zur Zerstörung der Membran führen kann, sicher verhindern.

Wird in der Permeat-Zuführung und/oder in der Waschfluid-Zuführung eine bevorzugterweise regelbare Permeat- bzw. Waschfluidpumpe angeordnet, so kann das Permeat und/oder das Waschfluid auch mit geringen Drücken, z.B. aus einem Tank unter Atmosphärendruck, bereitgestellt werden. Zudem ist bei geregelten und bevorzugterweise volumetrischen Pumpen eine einfache Einstellung bzw. Regelung der zugeführten Permeat- und/oder Waschfluidmengen möglich.

Ein dritter Aspekt der Erfindung betrifft eine Filtrationsanlage mit einer Vorrichtung gemäss dem zweiten Aspekt der Erfindung, wobei die Filtrationsanlage bevorzugterweise eine kontinuierlich arbeitende Membranfiltrationsanlage ist. Mit solchen Filtrationsanlagen lässt sich die Erfindung besonders nutzbringend einsetzen.

In einer bevorzugten Ausführungsform weist die Filtrationsanlage, vorgeschaltet zu der in ihr enthaltenen Vorrichtung gemäss dem zweiten Aspekt der Erfindung, eine oder mehrere weitere Diafiltrationsstufen auf. Zudem ist die Filtrationsanlage derartig ausgestaltet, dass den weiteren Diafiltrationsstufen als Waschfluid ausschliesslich eigenes Permeat und/oder Permeat der übrigen Diafiltrationsstufen zugeführt werden kann, wobei es bevorzugt ist, wenn jeder weiteren Diafiltrationsstufe Permeat der ihr nachgeschalteten Diafiltrationsstufe zugeführt werden kann. Auf diese Weise kann ein maximaler Auswaschgrad mit einer minimalen Menge externen Waschfluids erzielt werden und es wird eine minimale Permeatgesamtmenge mit einer maximaler Konzentration von filtergängigen Stoffen im Permeat erzeugt.

In einer weiteren bevorzugten Ausführungsform der Filtrationsanlage weisen die weiteren Diafiltrationsstufen Einstellmittel auf, mit denen die über die Permeat-Zuführungen den einzelnen Stufen zugeführten Permeatmengen, bevorzugterweise unabhängig voneinander, einstellbar sind, und zwar bevorzugterweise derart, dass die jeweils zugeführte Permeatmenge der Permeatleistung der jeweiligen Diafiltrationsstufe entspricht. Auf diese Weise kann die Viskosität des Produkts für jede Diafiltrationsstufe eingestellt werden und ein zuverlässiger Betrieb der Filtrationsanlage sichergestellt werden.

Dabei ist es bevorzugt, wenn die Einstellmittel eine automatische Regelung umfassen, mit welcher die jeweils über die Permeat-Zuführung zugeführte Permeatmenge automatisch geregelt werden kann, bevorzugterweise auf die Permeatmenge der jeweiligen Diafiltrationsstufe, so dass eine Eindickung des Produkts in der jeweiligen Diafiltrationsstufe verhindert werden kann.

Bevorzugterweise ist die Filtrationsanlage derartig ausgestaltet, dass die Drücke auf den Permeatseiten der Filtrationsmittel der weiteren Diafiltrationsstufen unabhängig von den über die Permeat-Zuführungen zugeführten Permeatmengen sind, so dass bei einer Veränderung dieser Mengen im wesentlichen keine Veränderung der Drücke auf den Permeatseiten der Filtrationsmittel entsteht. Hierdurch lassen sich die Transmembrandrücke auf einfache Weise konstant halten.

Ebenfalls bevorzugt ist es, wenn die Permeatseiten der Filtrationsmittel der weiteren Diafiltrationsstufen oder aller Diafiltrationsstufen der Filtrationsanlage miteinander verbunden sind, so dass im Betrieb auf den Permeatseiten der Filtrationsmittel im wesentlichen der gleiche Druck vorliegt. Hierdurch reduziert sich der anlagentechnischen Aufwand und die Prozessführung wird erleichtert. Können die Permeatseiten dabei mit der Umgebung kommunizieren, so dass der Druck im wesentlichen dem Atmosphärendruck entspricht, so kann dies auf besonders einfache Weise bewerkstelligt werden und es kann ein Auftreten negativer Transmembrandrücke sicher verhindert werden.

Werden dabei die Permeat-Seiten der Filtrationsmittel der weiteren Diafiltrationsstufen über bevorzugterweise regelbare Permeatpumpen jeweils mit den Permeat-Zuführung der vorgeschalteten Diafiltrationsstufe verbunden, so wird eine optimale Auswascheffizienz erzielt.

In noch einer weiteren bevorzugten Ausführungsform weist die Filtrationsanlage vorgeschaltet zu den Diafiltrationsstufen Nano-, Ultra- und/oder Microfiltrationsstufen auf. Mit derartigen Filtrationsanlagen lassen sich flüssige Ausgangsprodukte auf wirtschaftliche Weise und, falls gewünscht, im wesentlichen vollständig in filtergängige und nicht-filtergängige Stoffe aufteilen.

Ein vierter Aspekt der Erfindung betrifft die Verwendung der Vorrichtung gemäss dem zweiten Aspekt der Erfindung oder der Filtrationsanlage gemäss dem dritten Aspekt der Erfindung für die Filtration von Fruchtsaft, insbesondere von Steinobst-, Beeren-, Zitrus-, Ananas-, Trauben-, Apfel- oder Birnensaft. Bei dieser Verwendung treten die Vorteile der Erfindung besonders deutlich in Erscheinung.

## KURZE BESCHREIBUNG DER ZEICHNUNGEN

Weitere Ausgestaltungen, Vorteile und Anwendungen der Erfindung ergeben sich aus den abhängigen Ansprüchen sowie aus der nun folgenden Beschreibung anhand der Figuren. Dabei zeigen:

Fig. 1 eine schematische Darstellung einer erfindungsgemässen Vorrichtung in Form einer einzelnen Diafiltrationsstufe;

Fig. 2 eine schematische Darstellung einer erfindungsgemässen Filtrationsanlage mit einstufiger Diafiltration und vorgeschalteter mehrstufiger Ultrafiltration; und

Fig. 3 eine schematische Darstellung einer weiteren erfindungsgemässen Filtrationsanlage mit mehrstufiger Gegenstromdiafiltration und vorgeschalteter mehrstufiger Ultrafiltration.

## WEGE ZUR AUSFÜHRUNG DER ERFINDUNG

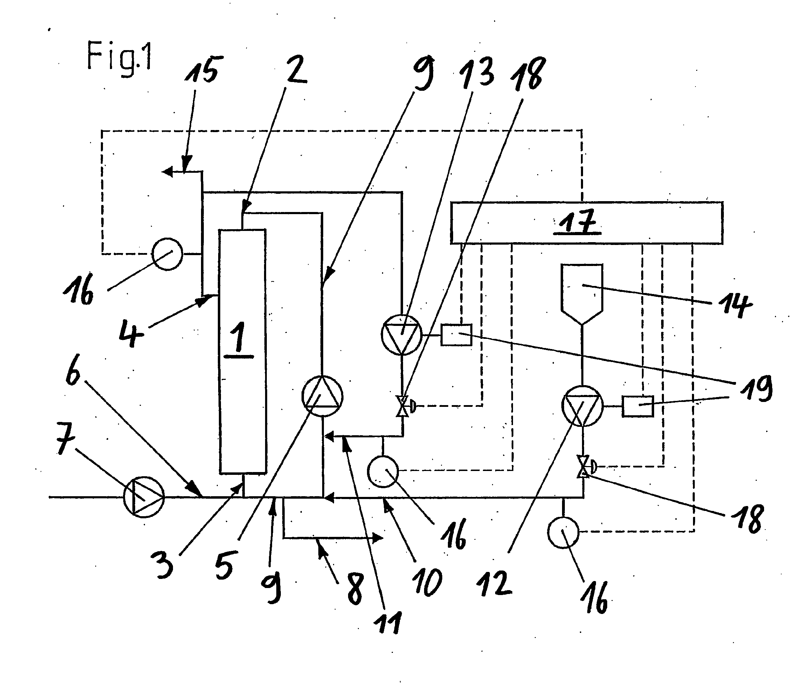

Das Grundprinzip der Erfindung kann aus Fig. 1 entnommen werden, welche das Anlagenschema einer erfindungsgemässen Vorrichtung in Form einer einzelnen Diafiltrationsstufe zeigt. Wie zu erkennen ist, weist die Diafiltrationsstufe als Membranfiltrationsmittel ein Querstromfiltrationselement 1 mit einem Produkt-Einlass 2, einem Produkt-Auslass 3 und einem Permeat-Auslass 4 auf. Der Produkt-Einlass 2 und der Produkt-Auslass 3 sind über eine Kreislaufleitung 9 mit einer Zirkulationspumpe 5 zu einem Produkt-Kreislauf verbunden, wobei die Kreislaufleitung 9 eine anspruchsgemässe Produktzuführung bildet. Dem Produktkreislauf kann fortwährend über eine Produkt-Speiseleitung 6 durch eine Speisepumpe 7 Produkt mit filtergängigen Inhaltsstoffen zugeführt werden und über eine Produkt-Ablaufleitung 8 Produkt mit einer gegenüber dem zugeführten Produkt verringerten Konzentration an filtergängiger Inhaltsstoffe entnommen werden. Es handelt sich also um einen offenen Produkt-Kreislauf, der einen kontinuierlichen Betrieb der Diafiltrationsstufe ermöglicht. Zwischen der Produkt-Ablaufleitung 8 und der Saugseite der Zirkulationspumpe 5 münden eine Waschfluid-Zuführung 10 und eine Permeat-Zuführung 11 in die Produkt-Zuführung 9 und damit in den Produkt-Kreislauf ein, über welche mittels einer Waschfluidpumpe 12 und einer Permeatpumpe 13 bestimmte Mengen von Waschfluid (hier Wasser) und Permeat in den in der Produkt-Zuführung strömenden Produktstrom eingespeisst werden können, um diesen zu verdünnen. Während die Waschfluidpumpe 12 ihr Waschfluid aus einem Waschfluidtank 14 bezieht, ist die Permeat-Zuführung 11 als Permeat-Rückführung 11 ausgebildet, indem die Saugseite der Permeatpumpe 13 mit dem Permeat-Auslass 4 des Querstromfiltrationselements 1 verbunden ist und somit mit der Permeatseite von dessen Filtermembranen. Ebenfalls mit dem Permeat-Auslass verbunden ist eine Permeat-Ablaufleitung 15, über welche überschüssiges Permeat zu einem Permeat-Sammelbehälter (nicht gezeigt) abgeleitet werden kann. Angeordnet im Permeat-Auslass 4 des Querstromfilrationselements 1 und in der Permeat-Zuführung 11 sowie der Waschfluid-Zuführung 10 sind Durchflussmessgeräte 16, mit denen der vom Filtrationselement 1 erzeugte Permeatfluss und die dem Produktstrom zugeführten Mengen an Permeat und Waschfluid separat gemessen werden können. Die Durchflussmessgeräte 16 sind funktionsverbunden mit einer automatischen Regelung 17, welche in Abhängigkeit von den gemessenen Durchflussmengen nach bestimmten Vorgaben gegebenenfalls einen Regeleingriff vornehmen kann, um ein bestimmtes Mengenverhältnis zwischen der zugeführten Permeatmenge und der zugeführten Waschfluidmenge und/oder zwischen der vom Filtrationselement 1 erzeugten Permeatmenge und der dem Produktstrom zugeführten Gesamtmenge aus Waschfluid und Permeat einzustellen. Ist ein Regeleingriff erforderlich, erfolgt dieser über Ansteuerung von Drosselventilen 18 in der Permeat-Zuführung 11 und der Waschfluid-Zuführung 12 oder durch Regelung der Drehzahlen der Permeat- und Waschfluidpumpen 12, 13 mit Hilfe von Frequenzumformern 19. In Fig. 1 sind beide Möglichkeiten schematisch dargestellt.

Soll beispielsweise ein maximaler Eindickungsgrad des aus dem Filtrationselement 1 austretenden Produkts nicht überschritten werden, so ermittelt die Regelung mittels der Durchflussmessgeräte 16 den vom Filtrationselement 1 erzeugten Permeatfluss sowie die über die Waschfluid-Zuführung 10 und die Permeat-Zufuhrung 11 dem Produkt-Kreislauf zugeführten Mengen aus Permeat und Waschfluid und regelt letztgenannte Mengen so ein, dass sich ein gewünschtes Verhältnis zwischen dem erzeugten Permeatfluss und der als Permeat und Waschfluid zugeführten Fluidmenge ergibt. Soll zudem ein bestimmter Auswaschgrad erzielt werden, wird das Verhältnis zwischen der zugeführten Permeatmenge und der zugeführten Waschfluidmenge auf einen bestimmten Wert eingestellt, wobei der Auswaschgrad mit zunehmender Menge Waschfluid und abnehmender Menge Permeat zunimmt.

Soll weder eine Eindickung noch eine Verdünnung des aus dem Filtrationselement 1 austretenden Produkts resultieren, so wird die Gesamtmenge aus zugeführtem Permeat und Waschfluid auf einen Wert eingestellt oder geregelt, der gleich gross ist wie der vom Filtrationselement erzeugte Permeatfluss.

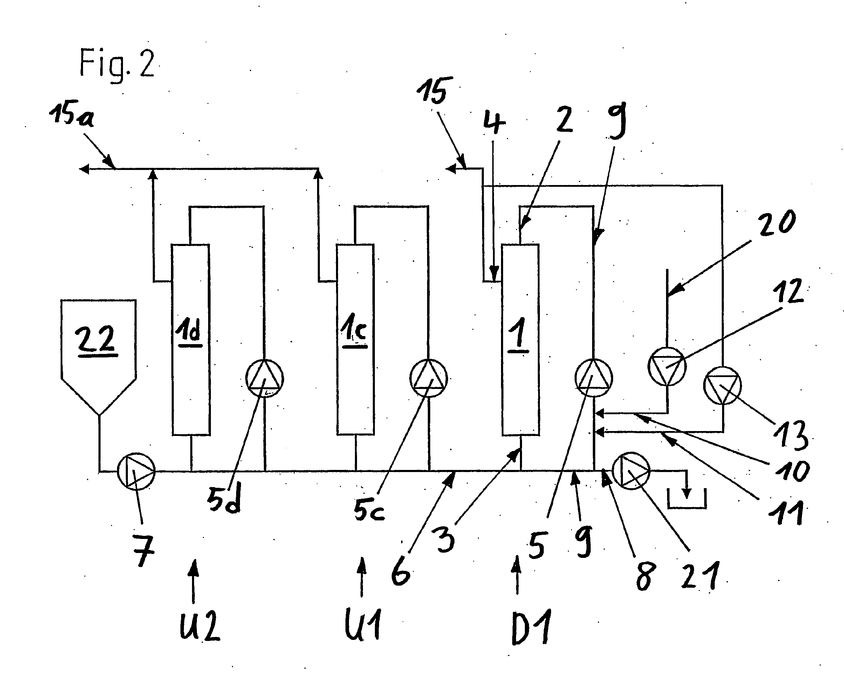

Fig. 2 zeigt eine schematische Darstellung einer erfindungsgemässen mehrstufigen Filtrationsanlage für Fruchtsäfte. Die Filtrationsanlage verfügt über zwei hintereinander geschaltete Ultrafiltrationsstufen U2, U1, denen eine Diafiltrationsstufe D1 gemäss Fig. 1 nachgeschaltet ist, mit dem Unterschied, dass hier das Waschfluid aus einem Wasserversorgungsnetz 20 entnommen wird und dass in der Produkt-Ablaufleitung 8 eine Retentatpumpe 21 angeordnet ist, welche volumetrisch fördert und als Drosselpumpe betrieben wird. Das zu filtrierende Produkt besteht im vorliegenden Fall aus unverdünntem Rohfruchtsaft und wird der Anlage aus einem Feed-Tank 22 über eine Speisepumpe 7 zugeführt. Die Diafiltrationsstufe D1 der hier gezeigten Filtrationsanlage verfügt ebenfalls über eine Regelung wie in Fig. 1 gezeigt, welche jedoch aus Gründen der Übersichtlichkeit hier nicht dargestellt wurde.

Die beiden Ultrafiltrationsstufen U1, U2 sind in bekannter Weise als offene Retentat-Kreisläufe mit Querstromfiltrationselementen 1c, 1d und Zirkulationspumpen 5c, 5d aufgebaut und hintereinander in der Produkt-Speiseleitung 6 der Diafiltrationsstufe D1 angeordnet, derart, dass dem Produkt-Kreislauf der Diafiltrationsstufe D1 ein bereits aufkonzentriertes Produkt zugeführt wird. Die Permeatseiten der Querstromfiltrationselemente 1c, 1d der beiden Ultrafiltrationsstufen U1, U2 sind mit einer Permeatsammelleitung 15a verbunden, über die das in diesen Stufen U1, U2 erzeugte Permeat in einen Permeat-Tank (nicht gezeigt) abgeleitet wird. Das von der Diafiltrationsstufe D1 erzeugte Permeat, welches neben produkteigenen filtergängigen Stoffen auch produktfremdes Waschfluid enthält und im vorliegenden Fall einer Fruchtsaftfiltration ein gegenüber dem Permeat der Ultrafiltrationsstufen U1, U2 verdünntes Produkt darstellt, wird über die Permeat-Ablaufleitung 15 in einen separaten Dia-Permeat-Tank oder einen gemeinsamen Permeat-Tank (nicht gezeigt) abgeleitet.

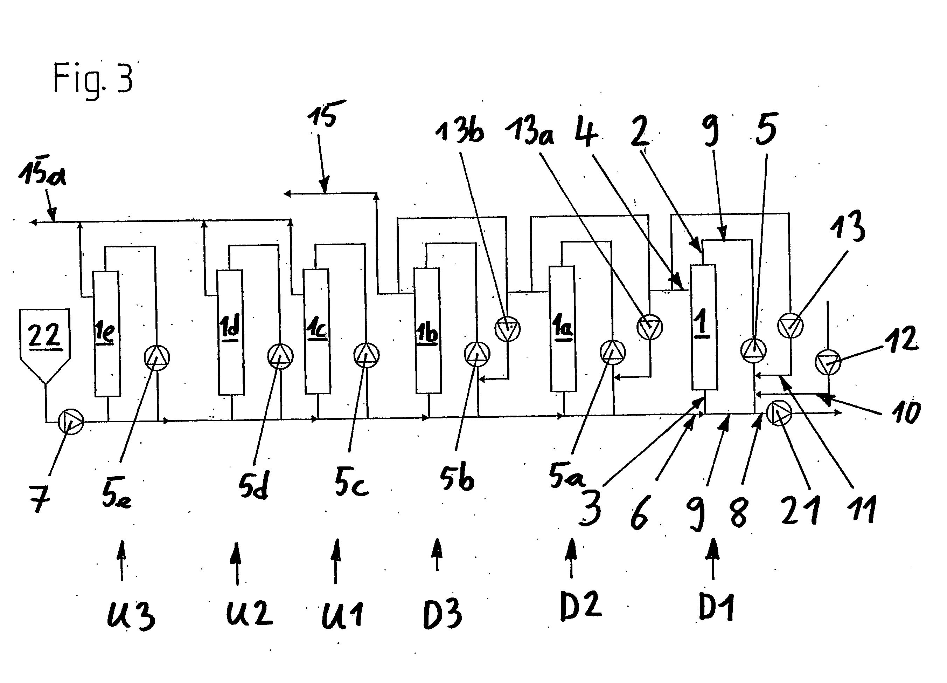

Fig. 3 zeigt eine schematische Darstellung einer weiteren erfindungsgemässen Filtrationsanlage mit mehrstufiger Gegenstromdiafiltration D1, D2, D3 und vorgeschalteter mehrstufiger Ultrafiltration U1, U2, U3, welche sich von der in Fig. 2 gezeigten lediglich dadurch unterscheidet, dass eine dritte Ultrafiltrationsstufe U3 mit identischem Aufbau wie die Stufen U1 und U2 vorhanden ist und dass zwischen den Ultrafiltrationsstufen U1, U2, U3 und der Diafiltrationsstufe D1 zwei weitere Diafiltrationsstufen D2, D3 angeordnet sind. Diese zusätzlichen Diafiltrationsstufen D2, D3 weisen praktisch den gleichen Aufbau wie die Diafiltrationsstufe D1 auf, mit dem Unterschied, dass sie keine Zuführung für Waschwasser besitzen. Dafür sind sie jedoch auf der Saugseite ihrer Permeatpumpen 13a, 13b nicht nur mit dem Permeat-Auslass ihrer eigenen Filtrationselemente 1a, 1b verbunden, sondern zusätzlich noch mit dem Permeat-Auslass der ihnen jeweils nachgeschalteten Diafiltrationsstufe D2, D1, so dass ihren Produktkreisläufen eigenes Permeat und/oder Permeat der darauffolgenden Diafiltrationsstufe als Waschfluid zugeführt werden kann. Auf diese Weise sind die Permeat-Auslässe der Filtrationselemente 1, 1a, 1b sämtlicher Diafiltrationsstufen D1, D2, D3 miteinander verbunden und entlassen überschüssiges Dia-Permeat in die Dia-Permeat-Ablaufleitung 15, welche als Sammelleitung dient und in einen belüfteten Dia-Permeat-Sammeltank oder Permeat-Sammeltank (nicht gezeigt) einmündet. Durch die Belüftung wird der Sammeltank auf Atmosphärendruck gehalten. Dies ist im vorliegenden Fall wichtig, da die Filtrationselemente 1, 1a, 1b mit laminierten Membranen ausgestattet sind, welche bei einem negativen Transmembrandruck zerstört würden. Die Permeat-Auslässe der Querstromfiltrationselemente 1c, 1d, le der Ultrafiltrationsstufen U1, U2, U3 sind mit einer Permeat-Sammelleitung 15a verbunden, über die das in diesen Stufen U1, U2, U3 erzeugte Permeat in einen Permeat-Tank (ebenfalls nicht gezeigt), welcher ebenfalls belüftet ist, abgeleitet werden kann.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann. Insbesondere sei darauf hingewiesen, dass die Erfindung nicht auf die gezeigten kontinuierlichen Anlagentypen mit offenem Produkt-Kreislauf beschränkt ist, sondern auch andere Anlagen vorgesehen sind, z.B. mit einem geschlossenen Produkt-Kreislauf, in dem das Produkt batchweise solange diafiltriert wird, bis ein bestimmter Auswaschgrad erreicht ist oder mit einer Durchlauf-Diafiltration ohne Produkt-Kreislauf.

## Patentansprüche

1.   Verfahren zur Diafiltration eines Produktes, umfassend die Schritte:

   a) Bereitstellen eines Produktstroms aus dem Produkt;
   b) Bereitstellen eines ersten Fluid-Stroms aus einem produktfremden Waschfluid;
   c) Bereitstellen eines zweiten Fluid-Stroms aus einem produkteigenen Permeat;
   d) Zuführen des ersten und des zweiten Fluid-Stroms zu dem Produktstrom derart, dass dieser durch die beiden Fluidströme verdünnt wird;
   e) Zuführen des mit dem ersten und dem zweiten Fluid-Strom verdünnten Produktstroms zu Membranfiltrationsmitteln (1); und
   f) Einstellen des Verhältnisses der beiden Fluidströme zueinander,

   wobei als zweiter Fluid-Strom Permeat von den Membranfiltrationsmitteln (1) bereitgestellt wird.

2.   Verfahren nach Anspruch 1, wobei die mit dem ersten und zweiten Fluid-Strom zugeführte Fluid-Gesamtmenge eingestellt wird.

3.   Verfahren nach einem der vorangehenden Ansprüche, wobei das Einstellen der zugeführten Fluid-Gesamtmenge und/oder des Verhältnisses der beiden Fluidströme zueinander automatisiert in einem Regelkreis (16, 17, 18, 19) erfolgt, insbesondere in Abhängigkeit von kontinuierlich oder intervallweise durch Messung ermittelten Verfahrensparametern.

4. Verfahren nach einem der Ansprüche 2 bis 3, wobei der Permeatfluss der Membranfiltrationsmittel (1) gemessen wird und die mit dem ersten und zweiten Fluid-Strom zugeführte Fluid-Gesamtmenge in Abhängigkeit von dem gemessenen Permeatfluss eingestellt wird, insbesondere auf einen Wert, der dem gemessenen Permeatfluss entspricht.

5. Verfahren nach einem der vorangehenden Ansprüche, wobei unabhängig voneinander einstellbare erste und zweite Fluid-Ströme bereitgestellt werden.

6. Verfahren nach einem der vorangehenden Ansprüche, wobei der Produktstrom im Kreislauf durch die Membranfiltrationsmittel (1) zirkuliert wird.

7. Verfahren nach einem der vorangehenden Ansprüche, wobei der Druck auf der Permeatseite der Membranfiltrationsmittel (1) unabhängig von der Fluid-Gesamtmenge und/oder unabhängig vom Verhältnis der beiden Fluid-Ströme zueinander im wesentlichen konstant gehalten wird, insbesondere im wesentlichen auf Atmosphärendruck gehalten wird.

8. Verfahren nach einem der vorangehenden Ansprüche, wobei das als Produktstrom bereitgestellte Produkt vorgängig in vorgeschalteten Diafiltrationsverfahren ausgewaschen wird.

9. Verfahren nach Anspruch 8, wobei in den vorgeschalteten Diafiltrationsverfahren ausschliesslich Permeat als Waschfluid verwendet wird, und insbesondere, wobei bei den vorgeschalteten Diafiltrationsverfahren Permeat verwendet wird, welches im jeweiligen Diafiltrationsverfahren und/oder in dem darauffolgenden Diafiltrationsverfahren erzeugt wird.

10. Verfahren nach einem der Ansprüche 8 bis 9, wobei bei den vorgeschalteten Diafiltrationsverfahren die von den Filtrationsmitteln (1) erzeugten-Permeatmengen gemessen werden und die als Waschfluid zugeführten Permeatmengen in Abhängigkeit von den erzeugten Permeatmengen eingestellt werden, insbesondere geregelt werden, insbesondere auf einen Wert von 10% bis 100% der erzeugten Permeatmengen, und insbesondere auf einen Wert von 80% bis 100% der erzeugten Permeatmengen.

11. Verfahren nach einem der Ansprüche 8 bis 10, wobei die Permeatseiten der bei den vorgeschalteten Diafiltrationsverfahren oder bei allen Diafiltrationsverfahren verwendeten Membranfiltrationsmittel (1) auf einem einheitlichen, im wesentlichen konstanten Druck gehalten werden, insbesondere im wesentlichen auf Atmosphärendruck gehalten werden.

12. Verfahren nach Anspruch 11, wobei die Permeatseiten der bei den vorgeschalteten Diafiltrationsverfahren oder bei allen Diafiltrationsverfahren verwendeten Membranfiltrationsmittel (1) über Verbindungsleitungen miteinander verbunden werden.

13. Verfahren nach einem der vorangehenden Ansprüche, wobei dem Diafiltrationsverfahren und den gegebenenfalls vorgeschalteten Diafiltrationsverfahren weitere Membranfiltrationsverfahren, insbesondere Nano-, Ultra- und/oder Microfiltrationsverfahren vorgeschaltet werden.

14. Verfahren nach einem der vorangehenden Ansprüche, wobei als Produkt ein Fruchtsaft, insbesondere ein Steinobst-, Beeren-, Zitrus-, Ananas-, Trauben-, Apfel- oder Birnensaft verwendet wird.

15. Vorrichtung für die Durchführung des Verfahrens nach einem der vorangehenden Ansprüche, umfassend:

    a) Membranfiltrationsmittel (1) mit Produkt-Einlass (2), Produkt-Auslass (3) und Permeat-Auslass (4) ;
    b) eine Produkt-Zuführung (9) zum Zuführen eines Produktstroms zum Produkt-Einlass (2) der Membranfiltrationsmittel (1);
    c) eine Waschfluid-Zuführung (10) zum Zuführen eines Waschfluid-Stroms zu dem Produktstrom;
    d) eine Permeat-Zuführung (11) zum Zuführen eines produkteigenen Permeat-Stroms zu dem Produktstrom; und
    e) Einstellmittel (12, 13, 16, 17, 18, 19) zum Einstellen des Verhältnisses der zum Produktstrom zugeführten Waschfluid- und Permeat-Ströme zueinander,

wobei die Permeat-Zuführung (11) als Permeatrückführung ausgebildet ist, zum Rückführen von Permeat vom Permeat-Auslass (4) der Membranfiltrationsmittel (1) zum Produktstrom.

16. Vorrichtung nach Anspruch 15, wobei die Einstellmittel (12, 13, 16, 17, 18, 19) derartig ausgestaltet sind, dass die zugeführten Waschfluid- und Permeat-Ströme unabhängig voneinander einstellbar sind, insbesondere derart, dass sowohl die Gesamtmenge bestehend aus zugeführter Waschfluidmenge und zugeführter Permeatmenge einstellbar ist als auch das Verhältnis von zugeführter Waschfluidmenge zu zugeführter Permeatmenge.

17. Vorrichtung nach Anspruch 16, wobei die Einstellmittel (12, 13, 16, 17, 18, 19) eine automatische Regelung umfassen, mit welcher die Gesamtmenge bestehend aus zugeführter Waschfluidmenge und zugeführter Permeatmenge und/ oder das Verhältnis von zugeführter Waschfluidmenge zu zugeführter Permeatmenge automatisiert in einem Regelkreis (16, 17, 18 oder 12, 13, 16, 17, 19) erfolgen kann, insbesondere in Abhängigkeit von kontinuierlich oder intervallweise durch Messung ermittelten Verfahrensparametern.

18. Vorrichtung nach einem der Ansprüche 15 bis 17, wobei der Produkt-Einlass (2) und der Produkt-Auslass (3) der Membranfiltrationsmittel (1) über eine Zirkulationspumpe (5) zu einem Produkt-Kreislauf verbunden sind.

19. Vorrichtung nach Anspruch 18, des Weiteren umfassend eine Produkt-Speiseleitung (6) zum Zuleiten eines Produktstromes zum Produkt-Kreislauf und eine Produkt-Ablaufleitung (8) zum Ableiten eines Produktstromes aus dem Produkt-Kreislauf.

20. Vorrichtung nach Anspruch 19, wobei die produkt-Speiseleitung (6) stromaufwärts von der Produkt-Ablaufleitung (8) in den Produkt-Kreislauf einmündet.

21. Vorrichtung nach einem der Ansprüche 19 bis 20, wobei die Produkt-Speiseleitung (6) und Produkt-Ablaufleitung (8) im Produkt-Kreislauf im Bereich zwischen dem Produkt-Auslass (3) der Membranfiltrationsmittel (1) und der Zirkulationspumpe (5) angeordnet sind.

22. Vorrichtung nach einem der Ansprüche 19 bis 21, wobei die Waschfluid-Zuführung (10) in den Produkt-Kreislauf im Bereich zwischen dem Produkt-Auslass (3) der Membranfiltrationsmittel (1) und der Zirkulationspumpe (5), insbesondere im Bereich zwischen der Produkt-Ablaufleitung (8) und der Zirkulationspumpe (5) einmündet.

23. Vorrichtung nach einem der Ansprüche 19 bis 22, wobei die Permeat-Zuführung (11) in den Produkt-Kreislauf im Bereich zwischen dem Produkt-Auslass (3) der Filtrationsmittel (1) und der Zirkulationspumpe (5), insbesondere im Bereich zwischen der Produkt-Ablaufleitung (8) und der Zirkulationspumpe (5) einmündet.

24. Vorrichtung nach einem der Ansprüche 15 bis 23, wobei die Waschfluid-Zuführung (10) und die Permeat-Zuführung (11) über zwei separate oder über eine gemeinsame Einmündung in den Produktstrom einmünden.

25. Vorrichtung nach einem der Ansprüche 15 bis 24, wobei die Vorrichtung derartig ausgestaltet ist, dass der Druck am Permeat-Auslass (4) der Filtrationsmittel (1) unabhängig von den zugeführten Waschfluid- und Permeatmengen ist, derart, dass bei einer Veränderung dieser Mengen keine Veränderung des Drucks am Permeat-Auslass (4) entsteht, und insbesondere, wobei diese derart ausgestaltet ist, dass der Druck am Permeat-Auslass (4) im wesentlichen konstant bei Atmosphärendruck liegt.

26. Vorrichtung nach einem der Ansprüche 15 bis 25, wobei in der Permeat-Zuführung (11) eine insbesondere regelbare Permeatpumpe (13) angeordnet ist.

27. Vorrichtung nach einem der Ansprüche 15 bis 26, wobei in der Waschfluid-Zuführung (10) eine insbesondere regelbare Waschfluidpumpe (12) angeordnet ist.

28. Filtrationsanlage, insbesondere kontinuierlich arbeitende Membranfiltrationsanlage, mit einer Vorrichtung nach einem der Ansprüche 15 bis 27.

29. Filtrationsanlage nach Anspruch 28, wobei der Vorrichtung (D1) nach einem der Ansprüche 15 bis 27 eine oder mehrere weitere Diafiltrationsstufen (D2, D3) vorgeschaltet sind, und wobei die Filtrationsanlage derartig ausgestaltet ist, dass den weiteren Diafiltrationsstufen (D2, D3) als Waschfluid ausschliesslich jeweils eigenes Permeat und/ oder Permeat der jeweils nachgeschalteten Diafiltrationsstufe (D2, D1) zuführbar ist.

30. Filtrationsanlage nach Anspruch 29, wobei die weiteren Diafiltrationsstufen (D2, D3) Einstellmittel (13a, 13b) aufweisen, mit denen die jeweils zugeführten Permeatmengen, insbesondere unabhängig voneinander, einstellbar sind, und insbesondere, mit denen die zugeführten Permeatmengen auf den Permeatfluss der jeweiligen Diafiltrationsstufe (D2, D3) einstellbar sind.

**31.** Filtrationsanlage nach Anspruch 30, wobei die Einstellmittel (13a, 13b) eine automatische Regelung (17) umfassen, mit welcher die jeweils zugeführte Permeatmenge automatisch geregelt werden kann, insbesondere auf die Permeatmenge der jeweiligen Diafiltrationsstufe (D2, D3).

**32.** Filtrationsanlage nach einem der Ansprüche 28 bis 31, wobei die Filtrationsanlage derartig ausgestaltet ist, dass die Drücke auf den Permeatseiten der Filtrationsmittel (1a, 1b) der weiteren Diafiltrationsstufen (D2, D3) unabhängig von den jeweils zugeführten Permeatmengen sind, derart, dass bei einer Veränderung dieser Mengen im wesentlichen keine Veränderung der Drücke auf den Permeatseiten der Filtrationsmittel (1a, 1b) entsteht.

**33.** Filtrationsanlage nach einem der Ansprüche 28 bis 32, wobei die Permeatseiten der Filtrationsmittel (1a, 1b) der weiteren Diafiltrationsstufen (D2, D3) oder aller Diafiltrationsstufen (D1, D2, D3) der Filtrationsanlage miteinander verbunden sind, derart, dass im Betrieb auf den Permeatseiten der Filtrationsmittel (1a, 1b oder 1, 1a, 1b) im wesentlichen der gleiche Druck vorliegt, und insbesondere, dass diese mit der Umgebung kommunizieren können, derart, dass der Druck auf den Permeatseiten im wesentlichen dem Atmosphärendruck entspricht.

**34.** Filtrationsanlage nach Anspruch 33, wobei die Permeat-Seiten der Filtrationsmittel (1a, 1b) der weiteren Diafiltrationsstufen (D2, D3) über insbesondere regelbare Permeatpumpen (13a, 13b) jeweils mit den Permeat-Auslässen der Filtrationsmittel (1, 1a) der vorgeschalteten Diafiltrationsstufe verbunden sind.

**35.** Filtrationsanlage nach einem der Ansprüche 28 bis 34, wobei die Anlage den Diafiltrationsstufen (D1, D2, D3) vorgeschaltete Nano-, Ultra- und/oder Microfiltrationsstufen (U1, U2, U3) aufweist.

**36.** Verwendung der Vorrichtung nach einem der Ansprüche 15 bis 27 oder der Filtrationsanlage nach einem der Ansprüche 28 bis 35 für die Filtration von Fruchtsaft, insbesondere von Steinobst-, Beeren-, Zitrus-, Ananas-, Trauben-, Apfel- oder Birnensaft.

## Claims

**1.** Process for the diafiltration of a product, comprising the steps of:

   a) providing a product stream consisting of the product;
   b) providing a first fluid stream consisting of a wash fluid external to the product;
   c) providing a second fluid stream consisting of a permeate derived from the product itself;
   d) supplying the first and second fluid streams to the product stream in such a manner that the product stream is diluted by the two fluid streams;
   e) supplying the product stream diluted by the first and second fluid streams to membrane filtration means (1), and
   f) adjusting the relative ratio of the two fluid streams,

   permeate from the membrane filtration means (1) being provided as the second fluid stream.

**2.** Process according to claim 1, in which the total quantity of fluid supplied by the first and second fluid streams is adjusted.

**3.** Process according to one of the preceding claims, in which the total quantity of fluid supplied and/or the relative ratio of the two fluid streams is/are adjusted automatically in a control loop (16, 17, 18, 19), in particular as a function of process parameters measured continuously or at intervals.

**4.** Process according to one of claims 2 to 3, in which the permeate flow of the membrane filtration means (1) is measured and the total quantity of fluid supplied by the first and second fluid streams is adjusted as a function of the measured permeate flow, in particular to a value corresponding to the measured permeate flow.

**5.** Process according to one of the preceding claims, in which first and second fluid streams that can be adjusted independently of one another are provided.

6. Process according to one of the preceding claims, in which the product stream is circulated through the membrane filtration means (1).

7. Process according to one of the preceding claims, in which the pressure on the permeate side of the membrane filtration means (1) is kept essentially constant irrespective of the total quantity of fluid and/or irrespective of the relative ratio of the two fluid streams, in particular is kept essentially at atmospheric pressure.

8. Process according to one of the preceding claims, in which the product provided as the product stream has previously been washed in upstream diafiltration processes.

9. Process according to claim 8, in which exclusively permeate is used as the wash fluid in the upstream diafiltration processes, in particular permeate produced in the particular diafiltration process and/or in the subsequent diafiltration process is used in the upstream diafiltration processes.

10. Process according to one of claims 8 to 9, in which the quantities of permeate produced by the filtration means (1) in the upstream diafiltration processes are measured and the quantities of permeate supplied as the wash fluid are adjusted, in particular regulated, as a function of the quantities of permeate produced, in particular to a value of 10 % to 100 % of the quantities of permeate produced, in particular to a value of 80 % to 100 % of the quantities of permeate produced.

11. Process according to one of claims 8 to 10, in which the permeate sides of the membrane filtration means (1) used in the upstream diafiltration processes or in all of the diafiltration processes are kept at a uniform, essentially constant pressure, in particular are kept essentially at atmospheric pressure.

12. Process according to claim 11, in which the permeate sides of the membrane filtration means (1) used in the upstream diafiltration processes or in all of the diafiltration processes are connected together by means of connecting lines.

13. Process according to one of the preceding claims, in which further membrane filtration processes, in particular nanofiltration, ultrafiltration and/or microfiltration processes, are carried out upstream of the diafiltration process and possibly the upstream diafiltration processes.

14. Process according to one of the preceding claims, in which a fruit juice, in particular a stone fruit, berry, citrus, pineapple, grape, apple or pear juice is used as the product.

15. Device for carrying out the process according to one of the preceding claims, comprising:

> a) membrane filtration means (1) with a product inlet (2), product outlet (3) and permeate outlet (4);
> b) a product supply line (9) for supplying a product stream to the product inlet (2) of the membrane filtration means (1);
> c) a wash fluid supply line (10) for supplying a wash fluid stream to the product stream;
> d) a permeate supply line (11) for supplying a permeate stream derived from the product itself to the product stream, and
> e) adjusting means (12, 13, 16, 17, 18, 19) for adjusting the relative ratio of the wash fluid and permeate streams supplied to the product stream,

the permeate supply line (11) being designed as a permeate return line for returning permeate from the permeate outlet (4) of the membrane filtration means (1) to the product stream.

16. Device according to claim 15, in which the adjusting means (12, 13, 16, 17, 18, 19) are designed in such a manner that the wash fluid and permeate streams supplied can be adjusted independently of one another, in particular in such a manner that both the total quantity consisting of the quantity of wash fluid supplied and the quantity of permeate supplied and the relative ratio of the quantity of wash fluid supplied and the quantity of permeate supplied are adjustable.

17. Device according to claim 16, in which the adjusting means (12, 13, 16, 17, 18, 19) comprise an automatic control system by means of which the total quantity consisting of the quantity of wash fluid supplied and the quantity of permeate supplied and/or the relative ratio of the quantity of wash fluid supplied and the quantity of permeate supplied can be adjusted automatically in a control loop (16, 17, 18 or 12, 13, 16, 17, 19), in particular as a function of process parameters measured continuously or at intervals.

18. Device according to one of claims 15 to 17, in which the product inlet (2) and the product outlet (3) of the membrane filtration means (1) are connected by means of a circulation pump (5) to form a product circuit.

19. Device according to claim 18, further comprising a product feed line (6) for feeding a product stream to the product circuit and a product discharge line (8) for discharging a product from the product circuit.

20. Device according to claim 19, in which the product feed line (6) opens into the product circuit upstream of the product discharge line (8).

21. Device according to one of claims 19 to 20, in which the product feed line (6) and the product discharge line (8) are arranged in the product circuit in the region between the product outlet (3) of the membrane filtration means (1) and the circulation pump (5).

22. Device according to one of claims 19 to 21, in which the wash fluid supply line (10) opens into the product circuit in the region between the product outlet (3) of the membrane filtration means (1) and the circulation pump (5), in particular in the region between the product discharge line (8) and the circulation pump (5).

23. Device according to one of claims 19 to 22, in which the permeate supply line (11) opens into the product circuit in the region between the product outlet (3) of the filtration means (1) and the circulation pump (5), in particular in the region between the product discharge line (8) and the circulation pump (5).

24. Device according to one of claims 15 to 23, in which the wash fluid supply line (10) and the permeate supply line (11) open into the product circuit by means of two separate openings or by means of a common opening.

25. Device according to one of claims 15 to 24, in which the device is designed in such a manner that the pressure at the permeate outlet (4) of the filtration means (1) is independent of the quantities of wash fluid and permeate supplied in such a manner that a change in these quantities does not result in a change in the pressure at the permeate outlet (4), in particular it is designed in such a manner that the pressure at the permeate outlet (4) is essentially constant at atmospheric pressure.

26. Device according to one of claims 15 to 25, in which, in particular, a variable delivery permeate pump (13) is arranged in the permeate supply line (11).

27. Device according to one of claims 15 to 26, in which, in particular, a variable delivery wash fluid pump (12) is arranged in the wash fluid supply line (10).

28. Filtration plant, in particular continuously operating membrane filtration plant, comprising a device according to one of claims 15 to 27.

29. Filtration plant according to claim 28, in which one or more further diafiltration stages (D2, D3) are arranged upstream of the device (D1) according to one of claims 15 to 27 and in which the filtration plant is designed in such a manner that exclusively permeate derived from these particular diafiltration stages themselves and/or permeate from the respective downstream diafiltration stage (D2, D1) can be supplied to the further diafiltration stages (D2, D3) as the wash fluid.

30. Filtration plant according to claim 29, in which the further diafiltration stages (D2, D3) comprise adjusting means (13a, 13b) by means of which the respective quantities of permeate supplied can be adjusted, in particular independently of one another, in particular by means of which the quantities of permeate supplied can be adjusted to the permeate flow of the particular diafiltration stage (D2, D3).

31. Filtration plant according to claim 30, in which the adjusting means (13a, 13b) comprise an automatic control system (17) by means of which the respective quantity of permeate supplied can be regulated automatically, in particular to the quantity of permeate of the particular diafiltration stage (D2, D3).

32. Filtration plant according to one of claims 28 to 31, in which the filtration plant is designed in such a manner that the pressures on the permeate sides of the filtration means (1a, 1b) of the further diafiltration stages (D2, D3) are independent of the respective quantities of permeate supplied in such a manner that a change in these quantities results in essentially no change in the pressures on the permeate sides of the filtration means (1a, 1b).

33. Filtration plant according to one of claims 28 to 32, in which the permeate sides of the filtration means (1a, 1b) of the further diafiltration stages (D2, D3) or of all of the diafiltration stages (D1, D2, D3) of the filtration plant are connected together in such a manner that essentially the same pressure prevails on the permeate sides of the filtration means (1a, 1b or 1, 1a, 1b) during operation, in particular that they can communicate with the surroundings in such a manner that the pressure on the permeate sides corresponds essentially to atmospheric pressure.

34. Filtration plant according to claim 33, in which the permeate sides of the filtration means (1a, 1b) of the further diafiltration stages (D2, D3) are each connected by means of, in particular, variable delivery permeate pumps (13a, 13b) to the permeate outlets of the filtration means (1, 1a) of the upstream diafiltration stage.

35. Filtration plant according to one of claims 28 to 34, in which the plant comprises nanofiltration, ultrafiltration and/or microfiltration stages (U1, U2, U3) upstream of the diafiltration stages (D1, D2, D3).

36. Use of the device according to one of claims 15 to 27 or of the filtration plant according to one of claims 28 to 35 for the filtration of fruit juice, in particular, stone fruit, berry, citrus, pineapple, grape, apple or pear juice.

**Revendications**

1. Procédé de diafiltration d'un produit, comprenant les étapes :

   a) mise à disposition d'un courant de produit à partir du produit ;
   b) mise à disposition d'un premier courant de fluide à partir d'un fluide de lavage étranger au produit ;
   c) mise à disposition d'un deuxième courant de fluide à partir d'un perméat propre au produit ;
   d) amenée des premier et deuxième courants de fluide au courant de produit de façon que celui-ci soit dilué par les deux courants de fluide ;
   e) amenée du courant de produit dilué par les premier et deuxième courants de fluide à des moyens de filtration à membrane (1) ; et
   f) réglage du rapport des deux courants de fluide l'un par rapport à l'autre,

   du perméat des moyens de filtration à membrane (1) étant mis à disposition comme deuxième courant de fluide.

2. Procédé selon la revendication 1, dans lequel la quantité totale de fluide amenée avec les premier et deuxième courants de fluide est réglée.

3. Procédé selon une des revendications précédentes, dans lequel le réglage de la quantité totale de fluide amenée et/ou du rapport des deux courants de fluide l'un par rapport à l'autre est réalisé de manière automatisée dans une boucle d'asservissement (16, 17, 18, 19), en particulier en fonction de paramètres de procédé déterminés par mesure en continu ou par intervalles.

4. Procédé selon une des revendications 2 à 3, dans lequel le flux de perméat des moyens de filtration à membrane (1) est mesuré et la quantité totale de fluide amenée avec les premier et deuxième courants de fluide est réglée en fonction du flux de perméat mesuré, en particulier à une valeur qui correspond au flux de perméat mesuré.

5. Procédé selon une des revendications précédentes, dans lequel des premier et deuxième courants de fluide réglables indépendamment l'un de l'autre sont mis à disposition.

6. Procédé selon une des revendications précédentes, dans lequel le courant de produit est mis en circulation dans le circuit à travers les moyens de filtration à membrane (1).

7. Procédé selon une des revendications précédentes, dans lequel la pression du côté perméat des moyens de filtration à membrane (1) est maintenue essentiellement constante indépendamment de la quantité totale de fluide et/ou indépendamment du rapport des deux courants de fluide l'un par rapport, en particulier maintenue essentiellement à la pression atmosphérique.

**8.** Procédé selon une des revendications précédentes, dans lequel le produit mis à disposition sous forme de courant de produit est préalablement lavé dans des procédés de diafiltration placés en amont.

**9.** Procédé selon la revendication 8, dans lequel on utilise, dans les procédés de diafiltration placés en amont, exclusivement du perméat comme fluide de lavage, et en particulier dans lequel on utilise, dans les procédés de diafiltration placés en amont, du perméat qui est produit dans le procédé de diafiltration respectif et/ou dans le procédé de diafiltration suivant.

**10.** Procédé selon une des revendications 8 à 9, dans lequel, dans les procédés de diafiltration placés en amont, les quantités de perméat produites par les moyens de filtration (1) sont mesurées et les quantités de perméat amenées comme fluide de lavage sont réglées, en particulier régulées, en fonction des quantités de perméat produites, en particulier à une valeur de 10 % à 100 % des quantités de perméat produites, et en particulier à une valeur de 80 % à 100 % des quantités de perméat produites.

**11.** Procédé selon une des revendications 8 à 10, dans lequel les côtés perméat des moyens de filtration à membrane (1) utilisés dans les procédés de diafiltration placés en amont ou dans tous les procédés de diafiltration sont maintenus à une pression uniforme essentiellement constante, en particulier maintenus essentiellement à la pression atmosphérique.

**12.** Procédé selon la revendication 11, dans lequel les côtés perméat des moyens de filtration à membrane (1) utilisés dans les procédés de diafiltration placés en amont ou dans tous les procédés de diafiltration sont reliés ensemble au moyen de conduites de raccordement.

**13.** Procédé selon une des revendications précédentes, dans lequel d'autres procédés de filtration à membrane, en particulier des procédés de nanofiltration, d'ultrafiltration et/ou de microfiltration sont placés en amont du procédé de diafiltration et des procédés de diafiltration éventuellement placés en amont.

**14.** Procédé selon une des revendications précédentes, dans lequel on utilise comme produit un jus de fruits, en particulier un jus de fruits à noyau, de baies, d'agrumes, d'ananas, de raisin, de pomme ou de poire.

**15.** Dispositif pour la réalisation du procédé selon une des revendications précédentes, comprenant :

a) des moyens de filtration à membrane (1) avec une entrée de produit (2), une sortie de produit (3) et une sortie de perméat (4) ;
b) une amenée de produit (9) pour amener un courant de produit à l'entrée de produit (2) des moyens de filtration à membrane (1) ;
c) une amenée de fluide de lavage (10) pour amener un courant de fluide de lavage au courant de produit ;
d) une amenée de perméat (11) pour amener un courant de perméat propre au produit au courant de produit ; et
e) des moyens de réglage (12, 13, 16, 17, 18, 19) pour régler le rapport des courants de fluide de lavage et de perméat amenés au courant de produit l'un par rapport à l'autre,

l'amenée de perméat (11) étant réalisée sous la forme d'un retour de perméat, pour ramener du perméat de la sortie de perméat (4) des moyens de filtration à membrane (1) au courant de produit.

**16.** Dispositif selon la revendication 15, dans lequel les moyens de réglage (12, 13, 16, 17, 18, 19) sont conçus de manière que les courants de fluide de lavage et de perméat amenés soient réglables indépendamment l'un de l'autre, en particulier de manière que soit réglables aussi bien la quantité totale composée de la quantité de fluide de lavage amenée et de la quantité de perméat amenée que le rapport entre la quantité de fluide de lavage amenée et la quantité de perméat amenée.

**17.** Dispositif selon la revendication 16, dans lequel les moyens de réglage (12, 13, 16, 17, 18, 19) comprennent une régulation automatique qui permet de régler de manière automatisée dans une boucle d'asservissement (16, 17, 18 ou 12, 13, 16, 17, 19) la quantité totale composée de la quantité de fluide de lavage amenée et de la quantité de perméat amenée et/ou le rapport entre la quantité de fluide de lavage amenée et la quantité de perméat amenée, en particulier en fonction de paramètres de procédé déterminés par mesure en continu ou par intervalles.

**18.** Dispositif selon une des revendications 15 à 17, dans lequel l'entrée de produit (2) et la sortie de produit (3) des moyens de filtration à membrane (1) sont reliés à un circuit de produit par une pompe de circulation (5).

**19.** Dispositif selon la revendication 18, comprenant en outre une conduite d'alimentation de produit (6) pour amener un courant de produit au circuit de produit et une conduite d'évacuation de produit (8) pour faire sortir un courant de produit du circuit de produit.

**20.** Dispositif selon la revendication 19, dans lequel la conduite d'alimentation de produit (6) débouche dans le circuit de produit en amont de la conduite d'évacuation de produit (8).

**21.** Dispositif selon une des revendications 19 à 20, dans lequel la conduite d'alimentation de produit (6) et la conduite d'évacuation de produit (8) sont disposées dans le circuit de produit dans la région entre la sortie de produit (3) des moyens de filtration à membrane (1) et la pompe de circulation (5).

**22.** Dispositif selon une des revendications 19 à 21, dans lequel l'amenée de fluide de lavage (10) débouche dans le circuit de produit dans la région entre la sortie de produit (3) des moyens de filtration à membrane (1) et la pompe de circulation (5), en particulier dans la région entre la conduite d'évacuation de produit (8) et la pompe de circulation (5).

**23.** Dispositif selon une des revendications 19 à 22, dans lequel l'amenée de perméat (11) débouche dans le circuit de produit dans la région entre la sortie de produit (3) des moyens de filtration (1) et la pompe de circulation (5), en particulier dans la région entre la conduite d'évacuation de produit (8) et la pompe de circulation (5).

**24.** Dispositif selon une des revendications 15 à 23, dans lequel l'amenée de fluide de lavage (10) et l'amenée de perméat (11) débouchent dans le courant de produit par deux bouches séparées ou par une bouche commune.

**25.** Dispositif selon une des revendications 15 à 24, lequel dispositif est conçu de manière que la pression à la sortie de perméat (4) des moyens de filtration (1) soit indépendante des quantités de fluide de lavage et de perméat amenées, de façon qu'en cas de variation de ces quantités il ne se produise pas de variation de la pression à la sortie de perméat (4), et en particulier conçu de manière que la pression à la sortie de perméat (4) soit essentiellement constante et égale à pression atmosphérique.

**26.** Dispositif selon une des revendications 15 à 25, dans lequel une pompe à perméat (13), en particulier réglable, est disposée dans l'amenée de perméat (11).

**27.** Dispositif selon une des revendications 15 à 26, dans lequel une pompe à fluide de lavage (12) , en particulier réglable, est disposée dans l'amenée de fluide de lavage (10).

**28.** Installation de filtration, en particulier installation de filtration à membrane fonctionnant en continu, avec un dispositif selon une des revendications 15 à 27.

**29.** Installation de filtration selon la revendication 28, dans laquelle un ou plusieurs autres étages de diafiltration (D2, D3) sont placés en amont du dispositif (D1) selon une des revendications 15 à 27, et laquelle installation de filtration est conçue de manière que seul leur propre perméat et/ou le perméat de l'étage de diafiltration (D2, D1) respectivement placé en aval puisse être amené comme fluide de lavage aux autres étages de diafiltration (D2, D3).

**30.** Installation de filtration selon la revendication 29, dans laquelle les autres étages de diafiltration (D2, D3) présentent des moyens de réglage (13a, 13b) avec lesquels les quantités de perméat respectivement amenées sont réglables, en particulier indépendamment les unes des autres, et en particulier avec lesquels les quantités de perméat amenées sont réglables au flux de perméat de l'étage de diafiltration (D2, D3) respectif.

**31.** Installation de filtration selon la revendication 30, dans laquelle les moyens de réglage (13a, 13b) comprennent une régulation automatique (17) avec laquelle la quantité de perméat respectivement amenée peut être réglée automatiquement, en particulier à la quantité de perméat de l'étage de diafiltration (D2, D3) respectif

**32.** Installation de filtration selon une des revendications 28 à 31, laquelle installation de filtration est conçue de manière que les pressions des côtés perméat des moyens de filtration (1a, 1b) des autres étages de diafiltration (D2, D3) soient indépendantes des quantités de perméat respectivement amenées, de façon qu'en cas de variation de ces quantités il ne se produise essentiellement pas de variation des pressions des côtés perméat des moyens de filtration (1a, 1b).

**33.** Installation de filtration selon une des revendications 28 à 32, dans laquelle les côtés perméat des moyens de filtration (1a, 1b) des autres étages de diafiltration (D2, D3) ou de tous les étages de diafiltration (D1, D2, D3) de l'installation de filtration sont reliés entre eux de façon qu'en fonctionnement il existe essentiellement la même pression des côtés perméat des moyens de filtration (1a, 1b ou 1, 1a, 1b), et en particulier dans laquelle ceux-ci peuvent communiquer avec l'environnement de façon que la pression des côtés perméat corresponde essentiellement à la pression atmosphérique.

**34.** Installation de filtration selon la revendication 33, dans laquelle les côtés perméat des moyens de filtration (1a, 1b) des autres étages de diafiltration (D2, D3) sont chaque fois reliés par des pompes à perméat (13a, 13b), en particulier réglables, aux sorties de perméat des moyens de filtration (1, 1a) de l'étage de diafiltration placé en amont.

**35.** Installation de filtration selon une des revendications 28 à 34, laquelle installation présente des étages de nanofiltration, d'ultrafiltration et/ou de microfiltration (U1, U2, U3) placés en amont des étages de diafiltration (D1, D2, D3).

**36.** Utilisation du dispositif selon une des revendications 15 à 27 ou de l'installation de filtration selon une des revendications 28 à 35 pour la filtration de jus de fruits, en particulier de jus de fruits à noyau, de baies, d'agrumes, d'ananas, de raisin, de pomme ou de poire.

Fig1

Fig. 2

EP 1 715 764 B1

Fig. 3

U3  U2  U1  D3  D2  D1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

• US 6440222 B

### In der Beschreibung aufgeführte Nicht-Patentliteratur

• **R.F. Madsen.** Design of sanitary and sterile UF- and diafiltration plants. *Separation and Purification Technology,* 2001, vol. 22-23, 79-87